# EUROPÄISCHE PATENTSCHRIFT

(11) **EP 3 980 296 B1**
(45) Veröffentlichungstag und Bekanntmachung des Hinweises auf die Patenterteilung: **13.09.2023**
(21) Anmeldenummer: 20725997.9
(22) Anmeldetag: 06.05.2020
(51) Int. Cl.: B60R 5/02

(54) **LADERAUMEINRICHTUNG FÜR EINEN VORBAU EINES KRAFTWAGENS**
STORAGE COMPARTMENT DEVICE FOR A FRONT-END STRUCTURE OF A MOTOR VEHICLE
DISPOSITIF FORMANT ESPACE DE CHARGEMENT POUR UN AVANT-CORPS D'UN VÉHICULE À MOTEUR

(30) Priorität: 06.06.2019 DE 102019004010
(43) Veröffentlichungstag der Anmeldung: 13.04.2022
(73) Patentinhaber: Mercedes-Benz Group AG, 70372 Stuttgart (DE)
(72) Erfinder: KOWOLLIK, Volker, 70734 Fellbach (DE)
(74) Vertreter: Novagraaf Group
(86) Internationale Anmeldenummer: PCT/EP2020/062490
(87) Internationale Veröffentlichungsnummer: WO 2020/244870

(56) Entgegenhaltungen:
- DE-A1- 19 620 294
- DE-A1-102017 004 263
- DE-A1-102017 010 161
- DE-A1-102017 011 984
- DE-A1-102018 208 799

## Beschreibung

Die Erfindung betrifft eine Laderaumeinrichtung für einen Vorbau eines Kraftwagens gemäß dem Oberbegriff des Anspruchs 1.

Gerade bei elektrisch angetriebenen Kraftwagen führt das Wegfallen des Verbrennungsmotors zu einem Raumgewinn im Bereich des Vorbaus des Kraftwagens, welcher zur Unterbringung eines Laderaums genutzt werden kann. Derartige Laderäume im Bereich eines durch eine Fronthaube verschließbaren Frontraums des Vorbaus haben allerdings den Nachteil, dass diese sich in Fahrzeughochrichtung oftmals sehr tief in den Frontraum des Vorbaus hinein erstrecken und demzufolge relativ unkomfortabel zu be- und entladen sind.

Aus der DE 10 2017 004 263 A1 gemäss Oberbegriff des Anspruchs 1 geht ein verlagerbarer Laderaum hervor, welcher als eine Art Wanne oder Box ausgebildet und mittels einer Verlagerungseinrichtung zwischen einer im Vorbau aufgenommen Verstaustellung und zumindest teilweise aus dem Vorbau ausgefahrenen Stellung in einer entsprechenden Verlagerungsrichtung - üblicherweise parallel zur Fahrzeughochrichtung - verlagerbar ist.

Aufgabe der vorliegenden Erfindung ist es, eine Laderaumeinrichtung der eingangs genannten Art zu schaffen, mittels welcher ein Bauraum im Bereich des Vorbaus des Kraftwagens besonders gut zur Unterbringung des Laderaums nutzbar ist und welcher andererseits zum Be- und Entladen besonders ergonomisch und komfortabel zugänglich ist.

Diese Aufgabe wird erfindungsgemäß durch eine Laderaumeinrichtung mit den Merkmalen des Anspruchs 1 gelöst. Vorteilhafte Ausgestaltungen mit zweckmäßigen Weiterbildungen der Erfindung sind Gegenstand der abhängigen Ansprüche.

Die erfindungsgemäße Laderaumeinrichtung ist im Bereich eines Frontraums im Vorbau des Kraftwagens vorgesehen, wobei dieser Frontraum mittels einer zwischen einer Offenstellung und einer Schließstellung verlagerbaren, insbesondere schwenkbaren Fronthaube zumindest teilweise nach oben hin beziehungsweise von oben her abdeckbar ist. Die Laderaumeinrichtung zeichnet sich dadurch aus, dass ein beispielsweise boxartiger oder wannenartiger Laderaum mittels einer Verlagerungseinrichtung zwischen einer im Vorbau aufgenommenen Verstaustellung und einer dieser gegenüber angehobenen, insbesondere zumindest teilweise aus einem Vorbau ausgefahrenen Stellung in einer Verlagerungsrichtung verlagerbar ist. Die Verlagerungseinrichtung ist dabei insbesondere im Bereich des Frontraums abgestützt und weist vorzugsweise keine mechanische Kopplung oder dergleichen Verbindung zur Fronthaube auf, mittels welcher die Verlagerungsbewegung des Laderaums an diejenige der Fronthaube mechanisch gekoppelt wäre.

Die Verlagerungsrichtung des Laderaums kann linear oder aber zumindest längenbereichsweise auch bogenförmig verlaufen. Die Verlagerungseinrichtung kann dabei lediglich eine entsprechende Lagerung beziehungsweise Führung bewerkstelligen, oder aber beispielsweise eine manuelle Verlagerung entsprechend durch Federelemente wie Gasdruckfedern oder dergleichen unterstützen. In einer besonders komfortablen Ausführungsform wäre es auch denkbar, dass die Verlagerungseinrichtung einen automatischen beziehungsweise motorischen Antrieb umfasst, mittels welchem der Laderaum zwischen den jeweiligen Stellungen verlagerbar ist. Die Verlagerung in der entsprechenden Verlagerungsrichtung zwischen der im Vorbau aufgenommenen Stellung und der zumindest teilweise ausgefahrenen Stellung ermöglicht dabei durch Wahl einer geeigneten Verlagerungsbahn eine möglichst große Ausnutzung des freien Bauraums innerhalb des Frontraums des Vorbaus.

Um nun ein besonders ergonomisches und komfortables Be- und Entladen des Laderaums zu ermöglichen, ist dieser erfindungsgemäß um eine im Bereich von dessen unteren vorderen Randkante verlaufenden Schwenkachse (S) relativ zur Verlagerungseinrichtung (20) in einer von der ersten Verlagerungsrichtung (V) unterschiedlichen weiteren Verlagerungsrichtung (30) schwenkbar So ist es beispielsweise denkbar, dass der Laderaum zunächst in der ersten Verlagerungsrichtung aus der im Vorbau aufgenommenen Verstaustellung in die zumindest teilweise aus dem Vorbau ausgefahrene Stellung entlang einer entsprechenden Verlagerungsbahn verlagert wird, und insbesondere nach Erreichen dieser ausgefahrenen Stellung, aber gegebenenfalls auch in einer überlagerten Bewegung, der Laderaum in einer von der ersten Verlagerungsrichtung unterschiedlichen zweiten Verlagerungsrichtung in eine Be- und Entladestellung verlagerbar ist, in welcher eine besonders komfortable und ergonomische Zugänglichkeit des Laderaums gegeben ist. So kann es sich beispielsweise bei der ersten Verlagerungsrichtung um eine weitestgehend lineare oder bogenförmige Verlagerungsbahn handeln, wohingegen es sich bei der unterschiedlichen zweiten Verlagerungsrichtung um eine Verschwenkung um eine entsprechende Schwenkachse handelt.

Ein derartiges Verschwenken um eine entsprechende Schwenkachse ermöglicht ein Kippen beziehungsweise Schrägstellen des Laderaums hin zu einer vor dem Fahrzeug stehenden Person, sodass der Laderaum besonders gut und komfortabel zugänglich ist.

Eine weitere vorteilhafte Ausführungsform der Erfindung sieht vor, dass das Verschwenken des Laderaums in der weiteren Verlagerungsrichtung erst nach Erreichen der ausgefahrenen Stellung erfolgt. Somit ist eine hinsichtlich der Bewegungsabläufe äußerst einfache und reproduzierbare Verlagerung zwischen der Verstaustellung und der Be- und Entladestellung gegeben. Es ist allerdings klar, dass der Laderaum gegebenenfalls auch in der Verstaustellung oder der teilweise aus dem Vorbau ausgefahrenen Stellung be- und entladbar ist - allerdings entsprechend weniger komfortabel.

Eine weitere vorteilhafte Ausführungsform der Erfindung sieht vor, dass der Laderaum durch einen Deckel verschließbar beziehungsweise verschlossen ist, welcher um eine im Bereich von dessen oberer hinterer Randkante verlaufenden Schwenkachse verschwenkbar ist. Hierdurch kann der Deckel in einfacher Weise nach hinten oben hin geöffnet und beispielsweise arretiert werden, um eine besonders günstige ergonomische Handhabung zu erreichen.

Alternativ hierzu kann der Laderaum auch durch einen Deckel verschlossen sein, welcher um eine im Bereich von dessen oberer vorderer Randkante verlaufenden Schwenkachse verschwenkbar ist. Somit kann der Deckel nach vorne unten hin geöffnet werden, was besonders günstig ohne hohe Kraftanstrengung möglich ist.

In diesem Zusammenhang hat es sich als weiterhin vorteilhaft gezeigt, wenn der Deckel auch als Ladekantenschutzelement ausgebildet ist, mittels welchem in einem Be- und Entladebereich des Laderaums angeordnete Bauteile, beispielsweise eine Stoßfängerverkleidung, eine Softnose oder ein Querträger im Bereich eines Fronthaubenschlosses oder dergleichen überdeckbar sind. Der Deckel erfährt somit eine Doppelfunktion, nämlich einerseits die Abdeckung des Laderaums und andererseits den Schutz der Bauteile im Nahbereich des Laderaums.

In einer weiteren vorteilhaften Ausführungsform der Erfindung ist es vorgesehen, dass der Laderaum manuell, kraftunterstützt und/oder angetrieben mittels der Verlagerungseinrichtung zwischen der Verstaustellung und der ausgefahrenen Stellung und gegebenenfalls aus dieser auch zur Be- und Entladestellung verlagerbar ist. Mit anderen Worten dient die Verlagerungseinrichtung in einer einfachen Ausgestaltungsform lediglich als Führung des Laderaums, in einer günstigen Ausführungsform als zusätzliche Kraftunterstützung beispielsweise durch Gasdruckfedern oder dergleichen, um die manuelle Verlagerung zu vereinfachen, und in einer besonders komfortablen Ausführungsform als motorische Unterstützung, um die Verlagerung des Laderaums gegebenenfalls vollautomatisch darzustellen. Natürlich können hierbei auch nur die jeweiligen Bewegungsrichtungen auf die beschriebene Art und Weise durchgeführt werden.

Weiterhin hat es sich als vorteilhaft gezeigt, wenn die Verlagerungseinrichtung in der Verstaustellung und/oder in der ausgefahrenen Stellung arretierbar ist. Hierdurch ergibt sich eine besonders stabile und zuverlässige jeweilige Positionierung des Laderaums.

Schließlich hat es sich als vorteilhaft gezeigt, wenn die Verlagerungseinrichtung eine Trägerkonsole oder dergleichen umfasst, an welcher der Laderaum zur Verlagerung der weiteren Verlagerungseinrichtung gelagert ist. Dies hat insbesondere den Vorteil, dass eine besonders stabile und zuverlässige Positionierung und Halterung des Laderaums erreicht werden kann. Gegebenenfalls kann der Laderaum hierbei auch von der Trägerkonsole lösbar ausgebildet sein, um den Laderaum beispielsweise besonders günstig reinigen zu können.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine ausschnittsweise und schematische Seitenansicht eines Vorbaus eines Personenkraftwagens, welcher einen durch eine Fronthaube verschließbaren Frontraum begrenzt, innerhalb welchem ein Laderaum in einer im Vorbau aufgenommenen Verstaustellung angedeutet ist;
- Fig. 2: eine ausschnittsweise und schematische Seitenansicht des Vorbaus gemäß Fig. 1, in welcher die Fronthaube geöffnet dargestellt und der Laderaum mittels einer Verlagerungseinrichtung aus der in Fig. 1 dargestellten Verstaustellung in eine aus dem Frontraum des Vorbaus ausgefahrene Stellung in einer linearen Verlagerungsrichtung verlagert und anschließend um eine Schwenkachse relativ zur ersten Verlagerungseinrichtung in einer weiteren Verlagerungsrichtung verschwenkt worden ist, wobei anschließend ein Deckel zum Verschließen des Laderaums geöffnet worden ist; und in
- Fig. 3: eine schematische Vorderansicht auf den an der Verlagerungseinrichtung gehaltenen Laderaum gemäß den Fig. 1 und 2.

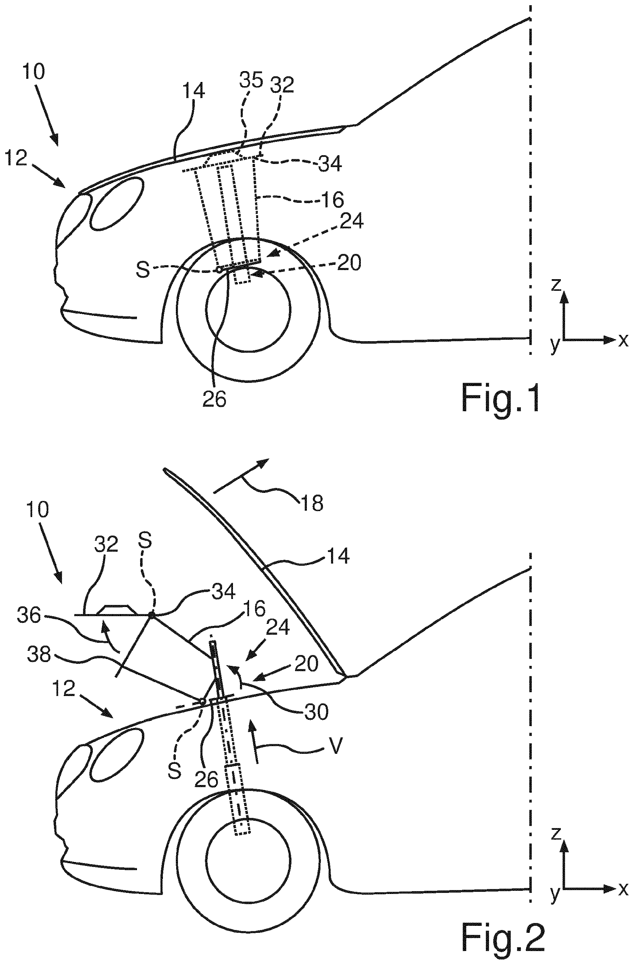

In den Figuren- 1 und 2 ist jeweils in einer ausschnittsweisen und schematischen Seitenansicht ein Vorbau 10 eines Kraftwagens, beispielsweise Personenkraftwagens, dargestellt. Bei dem Personenkraftwagen handelt es sich vorliegend um ein insbesondere rein elektrisch betriebenes Fahrzeug (BEV), gegebenenfalls aber auch ein Hybridfahrzeug (PHEV), welches aufgrund des Nicht-Vorhandenseins eines entsprechend großen Verbrennungsmotors einen freien Bauraum für eine im Weiteren noch beschriebene Laderaumeinrichtung aufweist. Diese Laderaumeinrichtung ist im vorliegenden Fall innerhalb eines durch den Vorbau 10 begrenzten Frontraums 12 angeordnet, welcher nach oben hin durch eine in Figur 1 geschlossen und in Figur 2 geöffnet dargestellte Fronthaube 14 überdeckt ist.

Die Laderaumeinrichtung umfasst einen wannen- beziehungsweise boxartigen Laderaum 16, welcher in Figur 1 unterhalb der geschlossenen Fronthaube 14 in einer im Vorbau 10 aufgenommenen Verstaustellung angeordnet ist.

Nach dem Öffnen der in einem windschutzscheibennahen Bereich schwenkbar gelagerten Fronthaube 14 in einer mit einem Pfeil 18 angedeuteten Richtung kann der Laderaum 16 mittels einer Verlagerungseinrichtung 20 aus der in Figur 1 dargestellten Verstaustellung in eine demgegenüber nach oben hin verlagerten Stellung angehoben werden. Bei dem in den Figuren dargestellten Ausführungsbeispiel der Laderaumeinrichtung ist vorgesehen, dass der Laderaum 16 in seiner angehobenen Stellung zumindest teilweise aus dem Vorbau 10 beziehungsweise dem Frontraum 12 herausgefahren ist, wie in Figur 2 angedeutet ist.

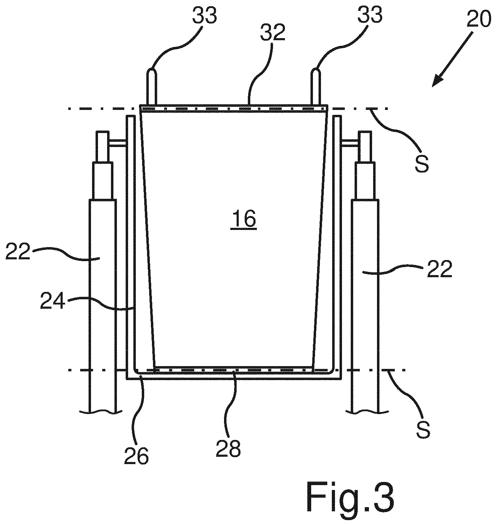

Hierzu weist die Verlagerungseinrichtung 20 - wie dies aus Figur 3 in einer ausschnittsweisen und schematischen Vorderansicht erkennbar ist-jeweilige seitliche Teleskopstangen 22 oder andere geeignete Lagerungs- und/oder Führungsmittel auf, mittels welchen der Laderaum 16 in einer mit einem Pfeil V angedeuteten Verlagerungsrichtung nach oben beziehungsweise nach unten verlagert werden kann. Im vorliegenden Fall entspricht die Verlagerungsrichtung V einer Geraden, welche gegenüber der Fahrzeughochrichtung (z-Richtung) schräg in Fahrtrichtung nach vorne geneigt verläuft. Aufgrund dieser Ausrichtung der Teleskopstangen wird der Laderaum beim Anheben gleichzeitig auch in Richtung einer vor dem Kraftwagen stehenden Person verlagert, so dass diese die in den Laderaum einzubringenden Gegenstände nicht so weit entgegen der Vorwärtsfahrtrichtung des Kraftwagens, also in Fahrzeuglängsrichtung (x-Richtung) tragen muss, um diese in den Laderaum einzubringen. Denkbar wäre auch, dass die Verlagerungsrichtung parallel oder im Wesentlichen parallel zur z-Richtung verläuft. Ebenfalls wäre es denkbar, dass die Verlagerungsrichtung V längenbereichsweise bogenförmig verläuft.

Wie des Weiteren aus Figur 3 erkennbar ist, ist zentral zwischen den beiden seitlichen Teleskopstangen 22 eine Trägerkonsole 24 angeordnet, welche insgesamt etwa U-förmig ausgebildet und mit ihren jeweiligen oberen Enden mit denjenigen der jeweils seitlich zugeordneten Teleskopstange 22 verbunden ist. Hierbei weist die Trägerkonsole 24 eine Trägerplatte 26 auf, auf welcher der Laderaum 16 im vorliegenden Fall angeordnet ist. An einem vorderen unteren Randbereich 28 ist der boxartige Laderaum 16 im Bereich einer Schwenkachse S, welche vorliegend in Fahrzeugquerrichtung (y-Richtung) und zumindest im Wesentlichen horizontal verläuft, gelenkig mit der Trägerplatte 26 verbunden. Hierdurch kann der Laderaum 16 relativ zur Trägerplatte 26 beziehungsweise zur Trägerkonsole 24 der Verlagerungseinrichtung 20 in einer von der ersten Verlagerungsrichtung V unterschiedlichen, mit einem Pfeil 30 angedeuteten zweiten Verlagerungsrichtung um die Schwenkachse S verlagert werden.

Im vorliegenden Ausführungsbeispiel ist der Laderaum 16 durch einen Deckel 32 verschließbar beziehungsweise verschlossen, welcher um eine im Bereich von dessen oberer hinterer Randkante 34 verlaufenden Schwenkachse s verschwenkbar ist. Demzufolge ist im vorliegenden Fall der Deckel 32 gemäß einem Pfeil 36 in Richtung nach oben von dem schräg gestellten Laderaum 16 öffenbar. Alternativ hierzu ist es auch denkbar, den Deckel 32 um eine im Bereich der oberen vorderen Randkante 38 verlaufenden Schwenkachse des Laderaums 16 verschwenkbar anzuordnen. In diesem Fall kann der Deckel 32 auch als Ladekantenschutzelement ausgebildet sein, mittels welchem in einem insbesondere vor dem Vorbau 10 angeordneten Be- und Entladebereich des Laderaums 16 angeordnete Bauteile des Vorbaus 10, beispielsweise Teile einer Stoßfängerverkleidung und/oder karosserieseitiges Querträgerelementüberdeckbar sind.

Im vorliegenden Ausführungsbeispiel kann der Laderaum 16 sowohl manuell zwischen der in Fig. 1 gezeigten Verstaustellung und der ausgefahrenen Stellung, in welcher der Laderaum 16 zunächst noch auf der Trägerplatte 26 ruht, verlagert werden. Hierzu dienen Griffe 33 an dem Deckel 32, welcher in seiner Schließstellung am Laderaum 16 arretiert ist und zum Be- und Entladen durch Lösen der Arretierung geöffnet werden kann.

Ebenso wäre eine kraftunterstützte Lösung denkbar, bei welcher beispielsweise jeweilige Gasdruckfedern oder dergleichen Elemente eingesetzt sind, um insbesondere das manuelle Anheben zu erleichtern. Umgekehrt kann demzufolge auch das manuelle Absenken erleichtert und gedämpft werden. Aus der ausgefahrenen Stellung beziehungsweise der Ruheposition auf der Trägerplatte 22 kann dann im vorliegenden Fall der Laderaum 16 um die Schwenkachse s gemäß dem Pfeil 30 nach vorne verschwenkt werden, wonach wiederum der Deckel 32 gemäß dem Pfeil 36 geöffnet werden kann. Auch die Schwenkbewegung des Laderaums in der weiteren Bewegungsrichtung gemäß dem Pfeil 30 kann gegebenenfalls kraftunterstützt oder durch einen Antrieb automatisch erfolgen. Dies gilt ebenso für das Öffnen und Schließen des Deckels 32.

Im vorliegenden Fall ist die Verlagerungseinrichtung 20 außerdem in der Verstaustellung und/oder in der ausgefahrenen Stellung arretierbar, um jeweils besonders günstige Fixierungen und Ladepositionierungen zu erreichen.

Des Weiteren ist insbesondere erkennbar, dass die Verlagerung des Laderaums zwischen der Verstaustellung und der ausgefahrenen Stellung gemäß der Verlagerungsrichtung V wie auch die weitere Verschwenkung gemäß dem Pfeil 30 sowie das Öffnen und Schließen des Deckels 32 gemäß dem Pfeil 36 unabhängig von einer Bewegung oder Position der Fronthaube 14 erfolgen. Dies ermöglicht insbesondere eine bauraumsparende und individuelle Steuerung der jeweiligen Position des Laderaums 16.

Die zweite Verlagerungsbewegung des Laderaums 16 und die Schwenkachse s in der zweiten Verlagerungsrichtung 30 - und zurück - kann insbesondere durchgeführt werden, wenn sich die Verlagerungseinrichtung 20 bei ausgefahrenem Laderaum 16 in ihrer fixierten oberen Stellung befindet. Unter Umstanden wäre auch eine überlagerte Bewegung des Laderaums 16 in der ersten Verlagerungsrichtung gemäß Pfeil V und in der zweiten Verlagerungsrichtung gemäß Pfeil 30 denkbar.

## Patentansprüche

1. Laderaumeinrichtung für einen einen Frontraum (12) aufweisenden Vorbau (10) eines Kraftwagens, wobei der Frontraum (12) mittels einer bewegbaren Fronthaube (14) abdeckbar ist, mit einem Laderaum (16), welcher mittels einer Verlagerungseinrichtung (20) zwischen einer im Vorbau (10) aufgenommenen Verstaustellung und einer dieser gegenüber angehobenen, insbesondere zumindest teilweise aus dem Vorbau (10) ausgefahrenen Stellung in einer ersten Verlagerungsrichtung (V) verlagerbar ist, wobei die Fronthaube und der Laderaum unabhängig voneinander bewegbar sind,
**dadurch gekennzeichnet, dass**
der Laderaum (16) um eine im Bereich von dessen unteren vorderen Randkante verlaufenden Schwenkachse (S) relativ zur Verlagerungseinrichtung (20) in einer von der ersten Verlagerungsrichtung (V) unterschiedlichen weiteren Verlagerungsrichtung (30) ist.

2. Laderaumeinrichtung nach Anspruch 1,
**dadurch gekennzeichnet, dass**
der Laderaum (16) erst nach Erreichen der ausaefahrenen Stellung relativ zur Verlagerungseinrichtung (20) in der weiteren Verlagerungsrichtung (30) verlagerbar ist.

3. Laderaumeinrichtung nach einem der vorhergehenden Ansprüche,
**dadurch gekennzeichnet, dass**
der Laderaum (16) durch einen Deckel (32) verschlossen ist, welcher um eine im Bereich von dessen oberer hinterer Randkante (34) verlaufenden Schwenkachse (s) schwenkbar ist.

4. Laderaumeinrichtung nach einem der vorhergehenden Ansprüche 1 bis 3, **dadurch gekennzeichnet, dass** der Laderaum (16) durch einen Deckel (32) verschlossen ist, welcher um eine im Bereich von dessen oberer vorderer Randkante (38) verlaufenden Schwenkachse (s) schwenkbar ist.

5. Laderaumeinrichtung nach Anspruch 4,
**dadurch gekennzeichnet, dass**
der Deckel (32) als Ladekantenschutzelement ausgebildet ist, mittels welchem in einem Be- und Entladebereich des Stauraums angeordnete Bauteile des Vorbaus (10) überdeckbar sind.

6. Laderaumeinrichtung nach einem der vorhergehenden Ansprüche,
**dadurch gekennzeichnet, dass**
der Laderaum (16) manuell und/oder kraftunterstützt mittels der Verlagerungseinrichtung (20) zwischen der Verstaustellung und der ausgefahrenen Stellung verlagerbar ist.

7. Laderaumeinrichtung nach einem der vorhergehenden Ansprüche,
**dadurch gekennzeichnet, dass**
die Verlagerungseinrichtung (20) in der Verstaustellung und/oder in der ausgefahrenen Stellung arretierbar ist.

8. Laderaumeinrichtung nach einem der vorhergehenden Ansprüche,
**dadurch gekennzeichnet, dass**
die Verlagerungseinrichtung (20) eine Trägerkonsole (24) umfasst, an welcher der Laderaum (16) zur Verlagerung in der weiteren Verlagerungsrichtung (30) gelagert ist.

## Claims

1. A storage compartment device for a front-end structure (10) of a motor vehicle, which front-end structure has a front compartment (12), the front compartment (12) being coverable by means of a movable front hood (14), the device comprising a storage compartment (16) which is displaceable (20) in a first displacement direction (V) between a stowage position received in the front-end structure (10) and a position which is raised with respect to the stowage position and is extended in particular at least partially out of the front-end structure (10), the front hood and the storage compartment being movable independently of one another,
**characterized in that**
the storage compartment (16) is pivotable, about a pivot axis (S) extending in the region of the lower front marginal edge of said compartment, relative to the displacement device (20) in a further displacement direction (30) different from the first displacement direction (V).

2. The storage compartment device according to claim 1,
**characterized in that**
the storage compartment (16) can be moved relative to the displacement device (20) in the further displacement direction (30) only after the extended position has been reached.

3. The storage compartment device according to either of the preceding claims,
**characterized in that**
the storage compartment (16) is closed by a cover (32) which is pivotable about a pivot axis (s) extending in the region of the upper rear marginal edge (34) of said compartment.

4. The storage compartment device according to any of the preceding claims 1 to 3,
**characterized in that**
the storage compartment (16) is closed by a cover (32) which is pivotable about a pivot axis (s) extending in the region of the upper front marginal edge (38) of said compartment.

5. The storage compartment device according to claim 4,
**characterized in that**
the cover (32) is designed as a loading edge protection element, by means of which components of the front-end structure (10) that are arranged in a loading and unloading region of the stowage space can be covered.

6. The storage compartment device according to any of the preceding claims,
**characterized in that**
the storage compartment (16) can be moved manually and/or in a force-assisted manner by means of the displacement device (20) between the stowage position and the extended position.

7. The storage compartment device according to any of the preceding claims,
**characterized in that**
the displacement device (20) can be locked in the stowage position and/or in the extended position.

8. The storage compartment device according to any of the preceding claims,
**characterized in that**
the displacement device (20) comprises a support bracket (24) on which the storage compartment (16) is mounted for displacement in the further displacement direction (30).

## Revendications

1. Dispositif formant espace de chargement pour un avant-corps (10) présentant un espace avant (12) d'un véhicule automobile, l'espace avant (12) pouvant être couvert au moyen d'un capot avant (14) pouvant être déplacé, comportant un espace de chargement (16) qui peut être déplacé au moyen d'un dispositif de déplacement (20) entre une position de stockage logée dans l'avant-corps (10) et une position relevée par rapport à celle-ci, en particulier au moins partiellement sortie de l'avant-corps (10), dans un premier sens de déplacement (V), le capot avant et l'espace de chargement pouvant être déplacés indépendamment l'un de l'autre,
**caractérisé en ce que**
l'espace de chargement (16) peut pivoter autour d'un axe de pivotement (S) s'étendant dans la zone de son rebord avant inférieur par rapport au dispositif de déplacement (20) dans un autre sens de déplacement (30) différent du premier sens de déplacement (V).

2. Dispositif formant espace de chargement selon la revendication 1,
**caractérisé en ce que**
l'espace de chargement (16) ne peut être déplacé par rapport au dispositif de déplacement (20) dans l'autre sens de déplacement (30) qu'après avoir atteint la position sortie.

3. Dispositif formant espace de chargement selon l'une quelconque des revendications précédentes,
**caractérisé en ce que**
l'espace de chargement (16) est fermé par un couvercle (32) qui peut pivoter autour d'un axe de pivotement (s) s'étendant dans la zone de son rebord arrière supérieur (34).

4. Dispositif formant espace de chargement selon l'une des revendications précédentes 1 à 3,
**caractérisé en ce que**
l'espace de chargement (16) est fermé par un couvercle (32) qui peut pivoter autour d'un axe de pivotement (s) s'étendant dans la zone de son rebord avant supérieur (38).

5. Dispositif formant espace de chargement selon la revendication 4,
**caractérisé en ce que**
le couvercle (32) est réalisé sous la forme d'un élément de protection de seuil de chargement, à l'aide duquel des composants de l'avant-corps (10) disposés dans une zone de chargement et de déchargement de l'espace de stockage peuvent être recouverts.

6. Dispositif formant espace de chargement selon l'une quelconque des revendications précédentes,
**caractérisé en ce que**
l'espace de chargement (16) peut être déplacé manuellement et/ou à l'aide d'une force au moyen du dispositif de déplacement (20) entre la position de stockage et la position sortie.

7. Dispositif formant espace de chargement selon l'une quelconque des revendications précédentes,
**caractérisé en ce que**
le dispositif de déplacement (20) peut être verrouillé dans la position de stockage et/ou dans la position sortie.

8. Dispositif formant espace de chargement selon l'une des revendications précédentes,
**caractérisé en ce que**
le dispositif de déplacement (20) comprend une console de support (24), sur laquelle l'espace de chargement (16) est monté pour le déplacement dans l'autre sens de déplacement (30).
